# EUROPEAN PATENT SPECIFICATION

(11) **EP 3 349 076 B1**
(45) Date of publication and mention of the grant of the patent: **23.06.2021**
(21) Application number: 17195443.1
(22) Date of filing: 09.10.2017
(51) Int. Cl.: G05B 13/02

(54) **CONTROL DEVICE, CONTROL METHOD, AND CONTROL PROGRAM**
STEUERUNGSVORRICHTUNG, STEUERUNGSVERFAHREN UND STEUERUNGSPROGRAMM
DISPOSITIF DE COMMANDE, PROCÉDÉ DE COMMANDE ET PROGRAMME DE COMMANDE

(30) Priority: 13.01.2017 JP 2017004208
(43) Date of publication of application: 18.07.2018
(73) Proprietor: Omron Corporation, Kyoto-shi, Kyoto 600-8530 (JP)
(72) Inventor: OZAKI, Masahiro, Kyoto-shi, Kyoto 600-8530 (JP); YAMADA, Takaaki, Kyoto-shi, Kyoto 600-8530 (JP); HASUI, Ryosuke, Kyoto-shi, Kyoto 600-8530 (JP); TAKAISHI, Akira, Kyoto-shi, Kyoto 600-8530 (JP); OGAWA, Hironori, Kyoto-shi, Kyoto 600-8530 (JP)
(74) Representative: Becker & Kurig Partnerschaft Patentanwälte PartmbB

(56) References cited:
- EP-A1- 1 467 265
- DE-B3-102006 014 352
- FR-A1- 2 821 175

## Description

### BACKGROUND OF THE INVENTION

### Field of the Invention

The present invention relates to a technology of control over an object device, such as temperature control and motor control.

### Description of Related Art

In the related art, a control system instrument such as a temperature adjustor often utilizes PID control as disclosed in Patent Document 1.

A PID control device calculates a PID value (proportional band P, integral time TI, differential time Td, and the like) using adaptive control or auto-tuning. The PID control device uses this PID value and determines an operation amount with respect to a control object such that an actual measurement value related to the control object approximates a target value.

### [Prior Art Document]

### [Patent Documents]

[Patent Document 1] Japanese Unexamined Patent Application Publication No. 2006-106925

### SUMMARY OF THE INVENTION

Incidentally, when an actual measurement value changes rapidly in a short time, there is a possibility of a problem in that an operation amount cannot be appropriately determined. For example, such a problem occurs when a temperature adjusting device controls the temperature of a heat bar to a uniform target temperature in a manufacturing step in which heating performed by means of the heat bar is utilized. Specifically, when a product is heated by the heat bar, the temperature of the heat bar drops rapidly. The temperature adjusting device is required to determine the operation amount such that the temperature drop is calibrated. However, in this case, sometimes a calculated operation amount is a value which cannot be realistically set. That is, there are cases in which the operation amount is saturated.

In this case, the temperature of the heat bar rises unnecessarily and significantly. In order to compensate for this unnecessary temperature rise, the temperature adjusting device causes an unnecessary and significant temperature drop in the opposite direction after the temperature rise. The temperature rise and the temperature drop are repeated thereafter and are unlikely to converge. A cycle of the temperature rise and the temperature drop is longer than a cycle of a change in the temperature of the heat bar.

In this manner, when the operation amount is saturated, a temperature hunting phenomenon with a long cycle occurs. Then, such a temperature hunting phenomenon results in destabilization of product quality and occurrence of defects, which is not desirable. Such a hunting phenomenon is a problem that is found in not only temperature control but also in rotational frequency control, torque control, and the like over a motor.

An object of the present invention is to provide a technology of control that suppresses a hunting phenomenon of a control object.

According to the invention, there is provided a control device including a filter, an input unit, and a control unit. A measurement value of a control object is input to the filter, which performs filtering processing of cutting off a high frequency component of the measurement value and outputs a result to the input unit. The input unit outputs an actual measurement value corresponding to the measurement value subjected to filtering processing. The control unit calculates an operation amount with respect to the control object such that the actual measurement value approximates a target value with respect to the control object.

According to this configuration, the rapid change in a measurement value is not manifested in an actual measurement value. Therefore, an operation amount is prevented from being an inappropriate value.

The control device of the invention further includes a setting unit which acquires the operation amount and adjusts a filter time constant for the filter in accordance with the operation amount.

According to this configuration, a filter time constant is set in accordance with the operation amount.

In addition, in the control device of the invention, the setting unit chronologically monitors the operation amount. When the setting unit detects that the operation amount is an abnormal value, the setting unit increases the filter time constant. When determining the abnormal value, specifically, the setting unit determines the abnormal value based on when the operation amount is saturated.

According to this configuration, the operation amount is monitored, and the filter time constant is properly adjusted in accordance with an abnormality of the operation amount.

In addition, in the control device of the invention, the setting unit sets a monitoring time having a predetermined duration. The setting unit reduces the filter time constant when the setting unit detects that the operation amount is a normal value during the monitoring time. When determining the normal value, specifically, the setting unit determines the normal value based on when the operation amount is not saturated, for example.

According to this configuration, over-filtering of the filter is prevented. That is, only a component required to be cut off in a measurement value is cut off.

In addition, in the control device of the invention, the setting unit sets a time constant for the filter to a filter time constant before the filter time constant is reduced when the setting unit detects that the operation amount is an abnormal value after the filter time constant is reduced.

According to this configuration, an excessive reduction of the filter time constant is prevented. That is, cutting-off is more properly carried out for a measurement value.

According to the invention, a hunting phenomenon of a control object can be suppressed. DE 102006014352 B3 describes a control device for reducing the ripple effects from a motor vehicle's voltage system.

### BRIEF DESCRIPTION OF THE DRAWINGS

Fig. 1 is a block diagram of a function of a temperature adjusting system including a temperature adjusting device according to a first embodiment of the present invention.
Fig. 2 is a graph indicating a difference between changes in actual measurement values PV caused depending on the presence or absence of filtering processing.
Fig. 3 is a graph illustrating a change in an operation amount MV when the configuration of this application is not provided.
Fig. 4 is a graph illustrating a time course of a temperature of a press-bonding surface of a heat bar in a configuration in which the configuration of this application is not provided.
Fig. 5 is a graph illustrating a time course of the temperature of the press-bonding surface of the heat bar in the configuration of this application.
Fig. 6 is a block diagram of a function of a temperature adjusting system including a temperature adjusting device according to a second embodiment of the present invention.
Fig. 7 is a flowchart illustrating first adjustment processing for a filter time constant of the temperature adjusting device according to the second embodiment of the present invention.
Fig. 8 is a flowchart illustrating second adjustment processing for the filter time constant of the temperature adjusting device according to the second embodiment of the present invention.

### DESCRIPTION OF THE EMBODIMENTS

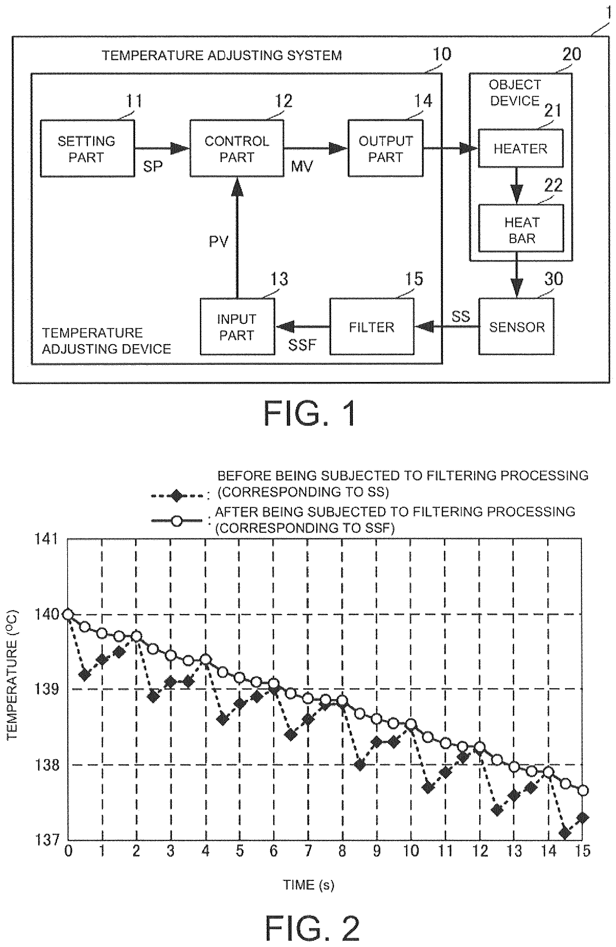

A control device, a control method, and a control program according to a first embodiment of the present invention will be described with reference to the drawings. The embodiment described below illustrates a case of a temperature adjustment (temperature control) for a heater and the like as a specific example of control. However, the embodiment can also be applied to control over other physical amounts such as rotation control and torque control of a motor and the like. Fig. 1 is a block diagram of a function of a temperature adjusting system including a temperature adjusting device according to the first embodiment of the present invention.

As illustrated in Fig. 1, a temperature adjusting device 10 includes a setting unit 11, a control unit 12, an input unit 13, an output unit 14, and a filter 15. The temperature adjusting device 10 corresponds to the "control device" of the present invention.

As illustrated in Fig. 1, the temperature adjusting device 10 is a configuration element of a temperature adjusting system 1. The temperature adjusting system 1 includes the temperature adjusting device 10, an object device 20, and a sensor 30. The object device 20 includes a heater 21 and a heat bar 22.

The heater 21 is connected to the output unit 14 of the temperature adjusting device 10 and is heated in response to energization power from the output unit 14. For example, the heater 21 is embedded in the heat bar 22 and heats the heat bar 22. Therefore, in this case, a control object is a temperature at a predetermined position in the heat bar 22 (for example, in the vicinity of a press-bonding surface or a welding-bonding surface).

For example, the sensor 30 is constituted by a thermocouple and the like and is mounted at a predetermined position in the heat bar 22. For example, the sensor 30 is embedded in the vicinity of the press-bonding surface or the welding-bonding surface of the heat bar 22. The sensor 30 senses a temperature of the heat bar 22 and outputs a measurement value SS. For example, the measurement value SS is a voltage value. The measurement value SS is input to the filter 15 of the temperature adjusting device 10.

Next, a specific configuration of the temperature adjusting device 10 will be described.

The filter 15 is connected to a location between the sensor 30 and the input unit 13. The filter 15 is a low-pass filter. The filter 15 carries out filtering processing of the measurement value SS and outputs a measurement value SSF after being subjected to filtering processing to the input unit 13.

A filter time constant for the filter 15 is set to a value at which a high frequency component of the measurement value SS generated due to a rapid change in the measurement value SS is cut off.

The input unit 13 calculates an actual measurement value PV based on the measurement value SSF after being subjected to filtering processing. The input unit 13 outputs the actual measurement value PV to the control unit 12. The actual measurement value PV is a value of the same unit as a target value SP (described below). For example, when the target value SP is a Celsius temperature (°C), the actual measurement value PV is also a Celsius temperature (°C).

The setting unit 11 sets the target value SP and outputs the set result to the control unit 12. In this case, the target value SP is a temperature. More specifically, the target value SP is a target temperature at a position in the heat bar 22 sensed by the sensor 30.

The control unit 12 calculates an operation amount MV using the target value SP and the actual measurement value PV. More specifically, the control unit 12 calculates the operation amount MV using PID control or the like such that the actual measurement value PV approximates the target value SP. The control unit 12 outputs the operation amount MV to the output unit 14.

For example, the output unit 14 is an SSR, an electromagnetic switch, or a power adjuster. The output unit 14 operates in accordance with the operation amount MV and controls energization with respect to the heater 21.

When such feedback control is performed, the temperature of the heat bar 22 is stabilized within a predetermined temperature range which includes a target value.

Then, since the temperature adjusting device 10 according to the present embodiment includes the filter 15, the following operational effects can be acquired.

Fig. 2 is a graph indicating a difference between changes in the actual measurement values PV caused depending on the presence or absence of filtering processing. Fig. 2 illustrates a case where a control computation cycle is set to 0.5 [s], the filter time constant is set to 2.0 [s], and a press-bonding (welding) cycle of the heat bar 22 is set to 2.0 [s]. In Fig. 2, the horizontal axis indicates the time (sec), and the vertical axis indicates the temperature (°C). The vertical axis corresponds to the actual measurement value PV. The solid line and the O marks indicate a case of the configuration of this application, and the dotted line and the blackened diamond marks respectively indicate a configuration in the related art and a case where a measurement value SS is taken as an actual measurement value with no change.

When press-bonding (welding) of a product or the like is carried out by means of the heat bar 22, heat of the heat bar 22 propagates to the product side. Therefore, the temperature of the heat bar 22 drops. For example, as illustrated in Fig. 2, the temperature drops rapidly every 2.0 seconds. In this case, since a control cycle is set to 0.5 seconds, the temperature rises after the temperature drops rapidly. Therefore, a temperature corresponding to the measurement value SS vertically moves in a short cycle (here, a two-second cycle). Particularly, when the sensor 30 is disposed in the vicinity of the press-bonding surface (welding-bonding surface) of the heat bar 22, the measurement value SS is significantly affected by this disposition and moves vertically to a great extent in a short cycle (here, two-second cycle).

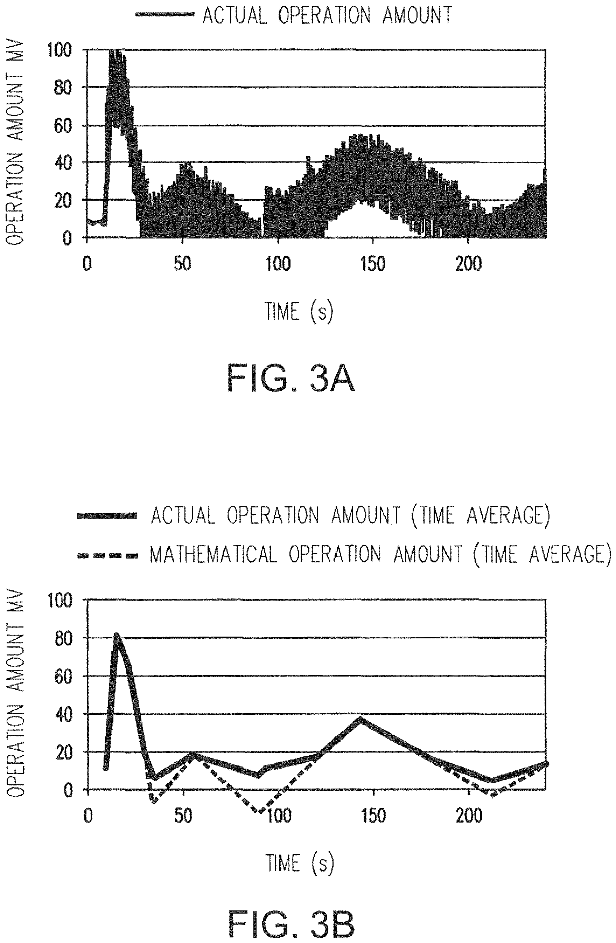

When a vertical movement of the temperature in a short cycle occurs, the following problem is caused. Fig. 3 is a graph illustrating a time change in an operation amount. Fig. 3 is a graph illustrating a change in the operation amount MV when the configuration of this application is not provided. That is, Fig. 3 is a graph illustrating a change in the operation amount MV when filtering processing is not carried out. In Fig. 3, the horizontal axis indicates time [s], and the vertical axis indicates the operation amount MV. The solid line indicates a change in the operation amount MV for each actual control timing. The solid bold line indicates a smoothing value of an actual operation amount MV. The dotted bold line indicates a smoothing value of a mathematical operation amount.

When filtering processing is not carried out, sometimes the mathematical operation amount indicates an unrealizable value. For example, although an operation amount can be set between a range from 0% to 100%, there exists a section in which the operation amount MV is less than 0% due to the above-described vertical movement of the temperature in a short cycle during the feedback control such as the PID control. That is, if the actual measurement value PV changes rapidly when the feedback control is performed, the operation amount MV changes in accordance with the change thereof. In this case, when the operation amount MV is in the vicinity of 0%, the mathematical operation amount MV sometimes becomes less than 0% due to a rapid change in the actual measurement value PV. In this case, the control unit 12 outputs the operation amount MV as 0%. That is, saturation occurs in the operation amount MV. When such saturation occurs in the operation amount MV, temperature control is not proper any longer. Therefore, feedback control that results in control over compensation for a deviation from the improper control is further performed. Then, a new deviation caused in this control is subjected to additional compensation through feedback control. Therefore, control over compensation for such deviations is repetitively performed.

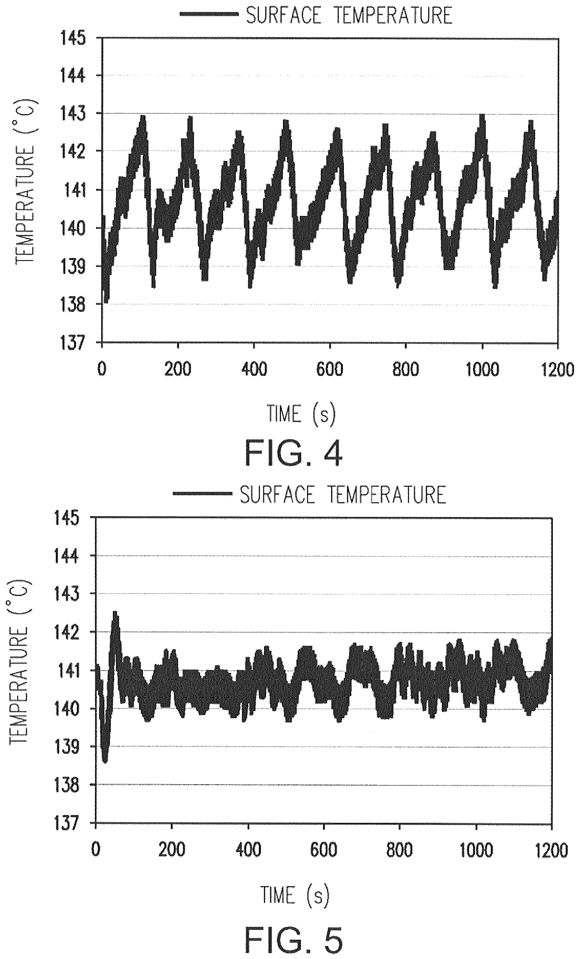

Fig. 4 is a graph illustrating a time course of a temperature of a press-bonding surface of a heat bar in a configuration in which the configuration of this application is not provided (configuration in the related art). In Fig. 4, the horizontal axis indicates time [s], and the vertical axis indicates the temperature [°C].

As illustrated in Fig. 4, when the above-described control is repetitively performed, a temperature hunting phenomenon having a cycle longer than the cycle of the temperature change in the heat bar 22 (above-described short cycle) occurs.

However, as illustrated in Fig. 2 with the solid line, when the configuration of this application, that is, the filter 15, is provided, a change in the measurement value SSF after being subjected to filtering processing, which is input to the input unit 13, subsides compared to the change in the measurement value SS, and thereby the vertical movement of the temperature in the short cycle is suppressed. Accordingly, the operation amount MV seldom deviates from the range of a normal value (above-described range from 0% to 100%). Therefore, a proper operation amount MV is continuously output. Accordingly, energization control over the heater 21 can be properly performed, so that the control over the temperature of the press-bonding surface of the heat bar 22 is stabilized.

Fig. 5 is a graph illustrating a time course of the temperature of the press-bonding surface of the heat bar in the configuration of this application. In Fig. 5, the horizontal axis indicates time [s], and the vertical axis indicates the temperature [°C].

As illustrated in Fig. 5, when the configuration of this application is employed, occurrence of a temperature hunting phenomenon having a cycle longer than the cycle of the temperature change in the heat bar 22 (above-described short cycle) is suppressed.

In this manner, when the configuration of the present embodiment is employed, even when a rapid change is caused in the short cycle of a control object, it is possible to suppress a hunting phenomenon with a long cycle.

In the aspect described above, suppression of a hunting phenomenon with a long cycle is realized by means of a plurality of functional units. However, it is possible to suppress a hunting phenomenon with a long cycle by programing and storing the processing of the control unit 12, the input unit 13, and the filter 15, and causing an information processing device such as a CPU to execute the program.

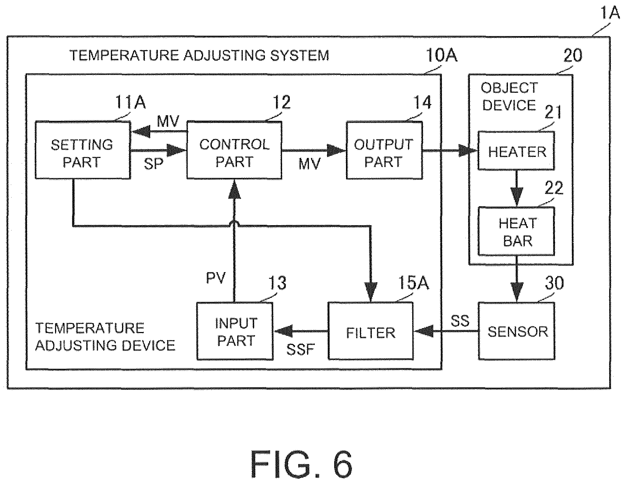

Next, a control device, a control method, and a control program according to a second embodiment of the present invention will be described with reference to the drawings. Fig. 6 is a block diagram of a function of a temperature adjusting system including a temperature adjusting device according to the second embodiment of the present invention.

A temperature adjusting system 1A according to the present embodiment is different from the temperature adjusting system 1 according to the first embodiment in regard to the configuration of a temperature adjusting device 10A, more specifically, in regard to the configurations and processing of a setting unit 11A and a filter 15A. Other configurations of the temperature adjusting system 1A and the temperature adjusting device 10A are similar to those of the temperature adjusting system 1 and the temperature adjusting device 10, and description of the similar portions will not be repeated.

The setting unit 11A monitors the operation amounts MV which are successively output by the control unit 12. The setting unit 11A adjusts the filter time constant for the filter 15A in accordance with the operation amount MV. The filter 15A carries out filtering processing with respect to the measurement value SS based on the adjusted filter time constant.

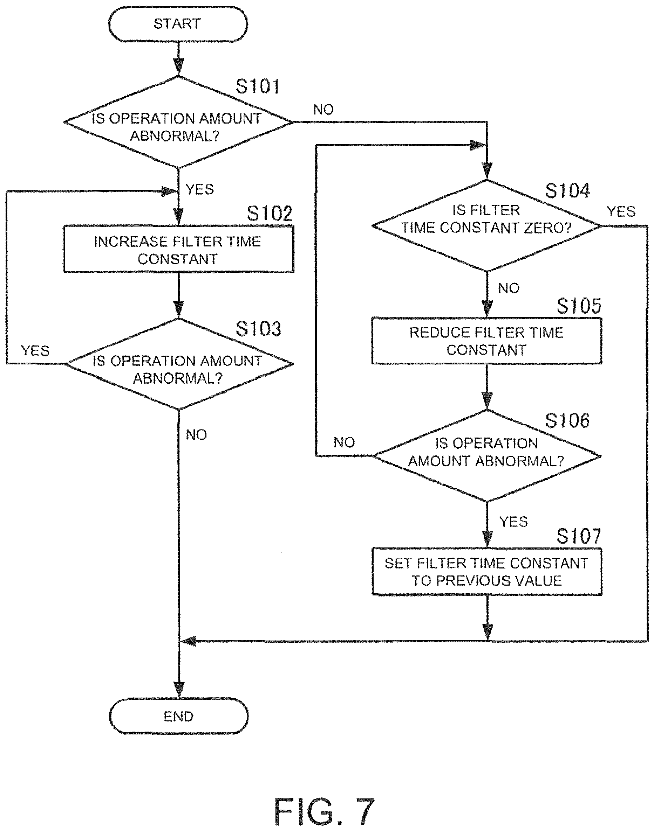

More specifically, as illustrated below, the setting unit 11A adjusts the filter time constant. Fig. 7 is a flowchart illustrating first adjustment processing for a filter time constant of the temperature adjusting device according to the second embodiment of the present invention.

The setting unit 11A acquires the operation amount MV and determines whether the operation amount MV is normal or abnormal. When the operation amount MV is abnormal (S101: YES), the setting unit 11A increases the filter time constant (S102). That is, a cut-off frequency of the filter 15A is shifted to a low frequency side.

When the operation amount MV is abnormal after the filter time constant is increased (SI03: YES), the setting unit 11A further increases the filter time constant (S102). When the operation amount MV is normal (S103: NO), the setting unit 11A ends the processing of adjusting the filter time constant.

In Step S101, when the operation amount MV is normal (S101: NO), the setting unit 11A determines whether the filter time constant is zero or not.

When the filter time constant is zero (S104: YES), the setting unit 11A ends the processing of adjusting the filter time constant.

When the filter time constant is not zero (SI04: NO), the setting unit 11A reduces the filter time constant (SI05). That is, the cut-off frequency of the filter 15A is shifted to a high frequency side.

When the operation amount MV is not abnormal (S106: NO) after the filter time constant is reduced, the setting unit 11A returns to Step S104. When the operation amount MV is abnormal (S106: YES), the setting unit 11A sets the filter time constant to a previous value, that is, a value immediately before the current processing of reducing the filter time constant (S107).

When such configurations and processing are employed, the filter time constant can be appropriately set in accordance with a temperature fluctuation of the short cycle. Accordingly, it is possible to prevent redundant filtering processing while suppressing a temperature hunting phenomenon with a long cycle. Therefore, a frequency component which is not to be cut off through filtering processing can be prevented from being cut off, and thus more suitable temperature control can be performed.

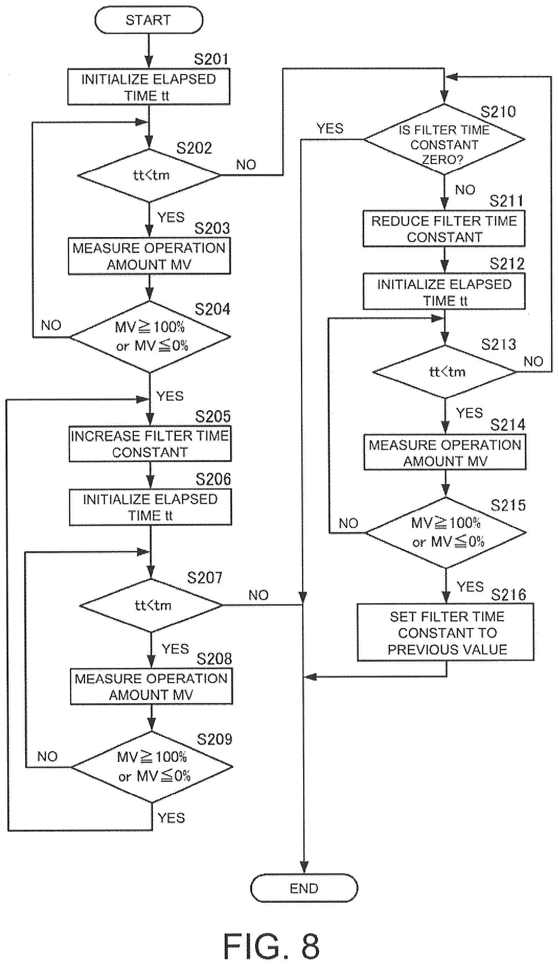

As processing of setting the filter time constant, the following processing may be employed. Fig. 8 is a flowchart illustrating second adjustment processing for the filter time constant of the temperature adjusting device according to the second embodiment of the present invention.

The setting unit 11A initializes an elapsed time tt (S201). The setting unit 11A determines whether or not the elapsed time tt is within a monitoring time tm. The monitoring time tm is set in advance. The monitoring time tm is set based on an estimated value, an experimental value, or the like of the above-described cycle of a temperature hunting phenomenon with a long cycle or the cycle of a temperature fluctuation in a short cycle. For example, the monitoring time tm is set to be longer than the cycle of a temperature fluctuation in a short cycle and to be shorter than the cycle of a temperature hunting phenomenon with a long cycle.

When the elapsed time tt is within the monitoring time tm (S202: YES), the setting unit 11A measures the operation amount MV (S203). When the operation amount MV is 100% or greater (MV ≥ 100%) or 0% or smaller (MV ≤ 0%) (S204: YES), the setting unit 11A increases the filter time constant (S205). That is, the setting unit 11A increases the filter time constant when the operation amount MV is an abnormal value.

When the operation amount MV is not 100% or greater (MV ≥ 100%) or 0% or smaller (MV ≤ 0%) (S204: NO), the setting unit 11A returns to Step S202.

After the filter time constant is increased in Step S205, the setting unit 11A initializes the elapsed time tt (S206). When the elapsed time tt is within the monitoring time tm (S207: YES), the setting unit 11A measures the operation amount MV (S208). When the operation amount MV is 100% or greater (MV ≥ 100%) or 0% or smaller (MV ≤ 0%) (S209: YES), the setting unit 11A returns to Step S205 and increases the filter time constant (S205).

When the operation amount MV is not 100% or greater (MV ≥ 100%) or 0% or smaller (MV ≤ 0%) (S209: NO), the setting unit 11A returns to Step S207.

In Step S207, when the elapsed time tt is within the monitoring time tm (S207: NO), the setting unit 11A ends the processing of adjusting the filter time constant.

The description returns to Step S202. When the elapsed time tt is not within the monitoring time tm (S202: NO), the setting unit 11A determines whether or not the filter time constant is zero.

When the filter time constant is zero (S210: YES), the setting unit 11A ends the processing of adjusting the filter time constant.

When the filter time constant is not zero (S210: NO), the setting unit 11A reduces the filter time constant (S211).

After the filter time constant is reduced in Step S211, the setting unit 11A initializes the elapsed time tt (S212). When the elapsed time tt is within the monitoring time tm (S213: YES), the setting unit 11A measures the operation amount MV (S214). When the elapsed time tt is not within the monitoring time tm (S213: NO), the setting unit 11A returns to Step S210.

When the operation amount MV is 100% or greater (MV ≥ 100%) or 0% or smaller (MV ≤ 0%) (S215: YES), the setting unit 11A sets the filter time constant to a previous value, that is, a value immediately before the current processing of reducing the filter time constant (S216). When the operation amount MV is not 100% or greater (MV ≥ 100%) or 0% or smaller (MV ≤ 0%) (S215: NO), the setting unit 11A returns to Step S213.

When such processing is employed, the filter time constant can be appropriately set in accordance with a temperature fluctuation of the short cycle. Accordingly, it is possible to prevent redundant filtering processing while suppressing a temperature hunting phenomenon with a long cycle. Moreover, the filter time constant can be prevented from being excessively reduced, and thus a temperature hunting phenomenon with a long cycle can be more reliably suppressed. That is, the filter time constant can be optimally set.

In the aspect described above, the filter is formed of a low-pass filter. However, a different filter may be employed as the filter, as long as the filter can attenuate and cut off the above-described components caused by a temperature fluctuation in a short cycle included in a measurement value. For example, the configuration may employ a notch filter having a frequency of an attenuation pole as a frequency of a temperature fluctuation in a short cycle. In this case, an adjustment of the above-described cut-off frequency may be replaced by an adjustment of the attenuation pole frequency.

### REFERENCE NUMERALS

1, 1A : TEMPERATURE ADJUSTING SYSTEM
10, 10A : TEMPERATURE ADJUSTING DEVICE
11, 11A : SETTING UNIT
12 : CONTROL UNIT
13 : INPUT UNIT
14 : OUTPUT UNIT
15, 15A : FILTER
20 : OBJECT DEVICE
21 : HEATER
22 : HEAT BAR
30 : SENSOR
MV : OPERATION AMOUNT
PV : ACTUAL MEASUREMENT VALUE
SP : TARGET VALUE
SS : MEASUREMENT VALUE
SSF : MEASUREMENT VALUE
tt : ELAPSED TIME
tm : MONITORING TIME
S101∼S107, S201∼S216 : STEP

## Claims

1. A control device (10, 10A) comprising:
a filter (15, 15A) in which a measurement value (SS) of a control object is input, which performs filtering processing of cutting off a high frequency component of the measurement value (SS), and outputs a result;
an input unit (13) which outputs an actual measurement value (PV) corresponding to the measurement value (SSF) subjected to the filtering processing;
a control unit (12) which calculates an operation amount (MV) with respect to the control object such that the actual measurement value (PV) approximates a target value (SP) with respect to the control object; and
a setting unit (11, 11A) which acquires the operation amount (MV) and adjusts a filter time constant for the filter (15, 15A) in accordance with the operation amount (MV), the control device (10, 10A) being **characterized in that**
the setting unit (11, 11A) monitors the operation amount (MV) and increases the filter time constant when the setting unit (11, 11A) detects that the operation amount (MV) is an abnormal value; and that the setting unit (11, 11A) determines the abnormal value based on when the operation amount (MV) is saturated.

2. The control device (10, 10A) according to claim 1,
wherein the setting unit (11, 11A) sets a monitoring time (tm) comprises a predetermined duration and reduces the filter time constant when the setting unit (11, 11A) detects that the operation amount (MV) is a normal value during the monitoring time (tm).

3. The control device (10, 10A) according to claim 2,
wherein the setting unit (11, 11A) determines the normal value based on when the operation amount (MV) is not saturated.

4. The control device (10, 10A) according to claim 2,
wherein the setting unit (11, 11A) sets a time constant for the filter (15, 15A) to a filter time constant before the filter time constant is reduced when the setting unit (11, 11A) detects that the operation amount (MV) is an abnormal value after the filter time constant is reduced.

5. A control method for a control device (10, 10A), the method comprising:
executing (S102, S105) filtering processing of cutting off a high frequency component of a measurement value (SS) of a control object;
calculating an actual measurement value (PV) based on the measurement value (SSF) after being subjected to the filtering processing;
calculating an operation amount (MV) with respect to the control object such that the actual measurement value (PV) approximates a target value (SP) with respect to the control object; and
acquiring the operation amount (MV) and adjusting a filter time constant for the filter (15, 15A) in accordance with the operation amount (MV), the control method being **characterized in** further comprising:
monitoring the operation amount (MV) and increasing the filter time constant when the setting unit (11, 11A) detects that the operation amount (MV) is an abnormal value; and
determining the abnormal value based on when the operation amount (MV) is saturated.

6. A control program allowing a control device (10, 10A) to execute the method of claim 5.

## Patentansprüche

1. Steuervorrichtung (10, 10A), umfassend:
einen Filter (15, 15A), in den ein Messwert (SS) eines Steuerobjekts eingegeben wird, der eine Filterverarbeitung zum Abschneiden einer Hochfrequenzkomponente des Messwerts (SS) durchführt und ein Ergebnis ausgibt;
eine Eingabeeinheit (13), die einen tatsächlichen Messwert (PV) ausgibt, der dem der Filterverarbeitung unterzogenen Messwert (SSF) entspricht;
eine Steuereinheit (12), die einen Betriebsbetrag (MV) in Bezug auf das Steuerobjekt berechnet, so dass sich der tatsächliche Messwert (PV) einem Zielwert (SP) annähert, in Bezug auf das Steuerobjekt; und
eine Einstelleinheit (11, 11A), die den Betriebsbetrag (MV) erfasst und eine Filterzeitkonstante für den Filter (15, 15A) in Übereinstimmung mit dem Betriebsbetrag (MV) einstellt, wobei die Steuervorrichtung (10, 10A) **dadurch gekennzeichnet ist, dass**
die Einstelleinheit (11, 11A) den Betriebsbetrag (MV) überwacht und die Filterzeitkonstante erhöht, wenn die Einstelleinheit (11, 11A) feststellt, dass der Betriebsbetrag (MV) ein abnormaler Wert ist; und dass die Einstelleinheit (11, 11A) den abnormalen Wert basierend darauf bestimmt, wann der Betriebsbetrag (MV) gesättigt ist.

2. Steuervorrichtung (10, 10A) gemäß Anspruch 1,
wobei die Einstelleinheit (11, 11A) eine Überwachungszeit (tm) einstellt, die eine vorbestimmte Dauer umfasst, und die Filterzeitkonstante reduziert, wenn die Einstelleinheit (11, 11A) feststellt, dass der Betriebsbetrag (MV) während der Überwachungszeit (tm) ein normaler Wert ist.

3. Steuervorrichtung (10, 10A) gemäß Anspruch 2,
wobei die Einstelleinheit (11, 11A) den normalen Wert basierend darauf bestimmt, wann der Betriebsbetrag (MV) nicht gesättigt ist.

4. Steuervorrichtung (10, 10A) gemäß Anspruch 2,
wobei die Einstelleinheit (11, 11A) eine Zeitkonstante für den Filter (15, 15A) auf eine Filterzeitkonstante einstellt, bevor die Filterzeitkonstante reduziert wird, wenn die Einstelleinheit (11, 11A) feststellt, dass der Betriebsbetrag (MV) ein abnormaler Wert ist, nachdem die Filterzeitkonstante reduziert wurde.

5. Steuerverfahren für eine Steuervorrichtung (10, 10A), wobei das Verfahren umfasst:
Ausführen (S102, S105) einer Filterverarbeitung zum Abschneiden einer Hochfrequenzkomponente eines Messwerts (SS) eines Steuerobjekts;
Berechnen eines tatsächlichen Messwerts (PV) auf der Grundlage des Messwerts (SSF), nachdem er der Filterverarbeitung unterzogen wurde;
Berechnen eines Betriebsbetrags (MV) in Bezug auf das Steuerobjekt, so dass sich der tatsächliche Messwert (PV) einem Zielwert (SP) annähert, in Bezug auf das Steuerobjekt; und
Erfassen des Betriebsbetrags (MV) und Einstellen einer Filterzeitkonstante für den Filter (15, 15A) in Übereinstimmung mit dem Betriebsbetrag (MV), wobei das Steuerverfahren **dadurch gekennzeichnet ist, dass** es ferner umfasst:
Überwachen des Betriebsbetrags (MV) und Erhöhen der Filterzeitkonstante, wenn die Einstelleinheit (11, 11A) feststellt, dass der Betriebsbetrag (MV) ein abnormaler Wert ist; und
Bestimmen des abnormalen Wertes basierend darauf, wann der Betriebsbetrag (MV) gesättigt ist.

6. Ein Steuerprogramm, das es einer Steuervorrichtung (10, 10A) erlaubt, das Verfahren gemäß Anspruch 5 auszuführen.

## Revendications

1. Dispositif de commande (10, 10A) comprenant :
un filtre (15, 15A) dans lequel une valeur de mesure (SS) d'un objet de commande est entrée, qui réalise un traitement par filtrage de coupure d'une composante de haute fréquence de la valeur de mesure (SS), et délivre un résultat ;
une unité d'entrée (13) qui délivre une valeur de mesure réelle (PV) correspondant à la valeur de mesure (SSF) soumise au traitement par filtrage ;
une unité de commande (12) qui calcule une quantité d'opération (MV) en ce qui concerne l'objet de commande de sorte que la valeur de mesure réelle (PV) approxime une valeur cible (SP) en ce qui concerne l'objet de commande ; et
une unité de réglage (11, 11A) qui acquiert la quantité d'opération (MV) et ajuste une constante de temps de filtre pour le filtre (15, 15A) en fonction de la quantité d'opération (MV), le dispositif de commande (10, 10A) étant **caractérisé en ce que**
l'unité de réglage (11, 11A) surveille la quantité d'opération (MV) et augmente la constante de temps de filtre lorsque l'unité de réglage (11, 11A) détecte que la quantité d'opération (MV) est une valeur anormale ;
et **en ce que** l'unité de réglage (11, 11A) détermine la valeur anormale sur la base du temps auquel la quantité d'opération (MV) est saturée.

2. Dispositif de commande (10, 10A) selon la revendication 1,
dans lequel l'unité de réglage (11, 11A) règle un temps de surveillance (tm) qui comprend une durée prédéterminée et réduit la constante de temps de filtre lorsque l'unité de réglage (11, 11A) détecte que la quantité d'opération (MV) est une valeur anormale pendant le temps de surveillance (tm).

3. Dispositif de commande (10, 10A) selon la revendication 2,
dans lequel l'unité de réglage (11, 11A) détermine la valeur normale sur la base du temps auquel la quantité d'opération (MV) n'est pas saturée.

4. Dispositif de commande (10, 10A) selon la revendication 2,
dans lequel l'unité de réglage (11, 11A) règle une constante de temps pour le filtre (15, 15A) à une constante de temps de filtre avant la réduction de la constante de temps de filtre lorsque l'unité de réglage (11, 11A) détecte que la quantité d'opération (MV) est une valeur anormale après la réduction de la constante de temps de filtre.

5. Procédé de commande pour un dispositif de commande (10, 10A), le procédé comprenant :
l'exécution (S102, S105) d'un traitement par filtrage de coupure d'une composante de haute fréquence d'une valeur de mesure (SS) d'un objet de commande ;
le calcul d'une valeur de mesure réelle (PV) sur la base de la valeur de mesure (SSF) après avoir été soumise au traitement par filtrage ;
le calcul d'une quantité d'opération (MV) en ce qui concerne l'objet de commande de sorte que la valeur de mesure réelle (PV) approxime une valeur cible (SP) en ce qui concerne l'objet de commande ; et
l'acquisition de la quantité d'opération (MV) et l'ajustement d'une constante de temps de filtre pour le filtre (15, 15A) en fonction de la quantité d'opération (MV), le procédé de commande étant **caractérisé en ce qu'**il comprend en outre :
la surveillance de la quantité d'opération (MV) et l'augmentation de la constante de temps de filtre lorsque l'unité de réglage (11, 11A) détecte que la quantité d'opération (MV) est une valeur anormale ; et la détermination de la valeur anormale sur la base du temps auquel la quantité d'opération (MV) est saturée.

6. Programme de commande permettant à un dispositif de commande (10, 10A) d'exécuter le procédé selon la revendication 5.
